# EUROPÄISCHE PATENTSCHRIFT

(11) **EP 2 793 243 B1**
(45) Veröffentlichungstag und Bekanntmachung des Hinweises auf die Patenterteilung: **26.05.2021**
(21) Anmeldenummer: 14154419.7
(22) Anmeldetag: 10.02.2014
(51) Int. Cl.: H01F 7/16, H01F 7/08

(54) **Elektromagnetischer Aktuator**
Electromagnetic actuator
Actionneur électromagnétique

(30) Priorität: 17.04.2013 DE 102013206897
(43) Veröffentlichungstag der Anmeldung: 22.10.2014
(73) Patentinhaber: Kendrion (Villingen) GmbH, 78048 Villingen-Schwenningen (DE)
(72) Erfinder: Sackl, Robert, 8530 Deutschlandberg (AT); Flühs, Joachim, 78050 Villingen-Schwenningen (DE)
(74) Vertreter: Westphal, Mussgnug & Partner Patentanwälte mbB

(56) Entgegenhaltungen:
- CA-A1- 2 511 070
- DE-A1- 3 309 904
- JP-A- H07 274 468
- JP-A- H08 116 658
- US-A- 4 422 060
- US-A- 5 257 014
- US-A- 5 434 549
- US-A1- 2001 032 633
- US-A1- 2012 025 635

## Beschreibung

Die Erfindung betrifft einen elektromagnetischen Aktuator gemäß Oberbegriff des Patentanspruchs 1.

Ein gattungsbildender elektromagnetischer Aktuator ist aus der DE 11 2006 002 553 T5 bekannt. Dieser Aktuator umfasst ein Statorgehäuse mit einem Anker, der aus einem weichmagnetischen Kern und diesen radial umschließenden Permanentmagnetringen aufgebaut ist, wobei diese Permanentmagnetringe in zueinander entgegengesetzter magnetischer Polarität um den Kern des Ankers angeordnet sind. Das Statorgehäuse umfasst mehrere axial beabstandete Erregerspulen, die den Permanentmagnetringen zugeordnet, konzentrisch zu diesen Permanentmagneten angeordnet sind und in zueinander entgegengesetzter Polarität verbunden sind. Bei einer Bestromung der Erregerspulen wird der Anker in axialer Richtung des Statorgehäuse bewegt, wobei die Bewegungsrichtung von der Stromrichtung abhängt.

US 5,434,549 A, JP H08 116658 A, JP H07 274468 A, US 2012/025635 A1, CA 2 511 070 A1, US 4,422,060 A, DE 33 09 904 A1, US 2001/032633 A1 und US 5,257,014 A stellen weiteren Stand der Technik dar.

Zur Herstellung eines solchen Ankers werden die Permanentmagnetringe auf den Anker geklebt. Nachteilig ist die schwierige und insbesondere unsaubere Handhabung des Klebers. So muss bspw. überschüssiger Kleber abgestreift werden, dabei besteht die Gefahr, dass der überschüssige Kleber unerwünscht auf andere Teile des Aktuators gelangen kann.

Desweiteren hat sich herausgestellt, dass im Betrieb eines solchen Aktuators die Gefahr besteht, dass beim Verstellen des Ankers sich dieser an den den Ankerraum bildenden Innenwänden verkanten kann. Des Weiteren ist nicht auszuschließen, dass aufgrund der Sprödigkeit des Werkstoffes der verwendeten Permanentmagnetringe es zu einem Abrieb an den Innenwänden des Ankerraums oder sogar eines Bruches des Permanentmagneten kommt.

Der Erfindung liegt daher die Aufgabe zugrunde, einen elektromagnetischen Aktuator der eingangs genannten Art mit verbesserten Eigenschaften anzugeben, bei dem insbesondere die genannten Nachteile vermieden werden.

Diese Aufgabe wird gelöst durch einen elektromagnetischen Aktuator mit den Merkmalen des Patentanspruchs 1.

Ein solcher elektromagnetischer Aktuator, welcher ein weichmagnetisches Gehäuse mit wenigstens zwei zueinander axial beabstandete Erregerspulen und einen in dem Gehäuse konzentrisch zu den Erregerspulen gelagerten und axial verschiebbaren Anker umfasst, wobei der Anker wenigstens einen diesen radial umschließenden Permanentmagnetring aufweist, der sich über die gesamte Länge des Ankers erstreckt, zeichnet sich erfindungsgemäß dadurch aus, dass eine nichtmagnetische Hülse vorgesehen ist, welche den Anker mit dem wenigstens einen Permanentmagnetring formschlüssig und radial und auch axial umschließt, so dass der wenigstens eine Permanentmagnetring vollständig eingebettet ist.

Durch die Einhausung des Ankers zusammen mit dem wenigsten einen Permanentmagnetring wird derselbe gegen Abrieb oder Schlag geschützt, da die die Einhausung darstellende Hülse mit ihrer äußeren Mantelfläche eine große Gleitfläche bietet und insbesondere bei mehreren auf dem Anker angeordneten Permanentmagnetringen auch nicht unterbrochen ist. Durch diese Einbettung mittels der Hülse entfällt natürlich das Kleben der Permanentmagnetringe auf dem Anker, wodurch die Gesamtmontage des elektromagnetischen Aktuators wesentlich erleichtert wird. Denn der Montagevorgang besteht lediglich darin, die Permanentmagnetringe in diese Hülse zu stecken, bevor der Anker in diese Hülse eingeführt wird und mit derselben vorzugweise mittels einer Verstemmung verbunden wird. Vorzugsweise ist diese erfindungsgemäße Hülse dünnwandig ausgebildet, wodurch nur geringfügig zusätzlicher Bauraum und Luftspalt erforderlich wird.

Ein weiterer Vorteil besteht darin, dass bei einem Bruch der empfindlichen Permanentmagnetringe sich keine negativen Auswirkungen auf die Funktion des elektromagnetischen Aktuators ergeben, da durch die erfindungsgemäße Einhausung ein Auseinanderfallen der Permanentmagnetringe verhindert wird. Schließlich wird durch diese Einhausung des wenigstens einen Permanentmagnetring tragenden Ankers dieser auch gegen Schmutz, insbesondere gegen metallische Partikel geschützt.

Erfindungsgemäß ist die Einhausung des den wenigstens einen Permanentmagnetring aufweisenden Ankers dadurch hergestellt, dass die Hülse stirnseitig jeweils mit den Stirnflächen des Ankers durch Aufpressen, Verstemmen oder durch Bördeln verbunden ist. Dies kann beispielsweise dadurch erreicht werden, dass ein die Stirnfläche des Ankers überstehender Rand der Hülse auf diese Stirnfläche abgekantet wird. Damit ergibt sich ein einfacher und sicherer Montagevorgang zur Herstellung eines solchen Ankers.

Des Weiteren ist gemäß einer Ausgestaltung der Erfindung zur Führung des Ankers ein magnetisches Lagerrohr mit einer dünnen nichtmagnetischen Laufschicht vorgesehen, welches konzentrisch zu den Erregerspulen in dem Gehäuse angeordnet ist. Damit wird ein wesentlich verbessertes Führungsverhalten des Ankers erreicht, da dieser nicht mehr ausschließlich von einer Achse geführt wird und dadurch auch die Gefahr einer Verkippung des Ankers verringert wird. Um die Gleiteigenschaften zu verbessern, kann die innere Mantelfläche dieses Lagerrohres mit einer Gleitschicht, insbesondere einer geeigneten Kunststoffbeschichtung versehen werden.

In einer weiteren Ausgestaltung der Erfindung ist der Anker mittels einer Achse in einem ersten stirnseitigen Lager des Gehäuses und mittels des Lagerrohrs als zweites Lager verschiebbar in dem Gehäuse gelagert. Damit wird nicht nur wegen der Ausgestaltung des zweiten Lagers mittels des Lagerrohres ein verbessertes Führungsverhalten mit reduzierter Verkippungsgefahr erreicht. Außerdem wird ergibt sich somit nur eine geringe Toleranzkette zwischen dem ersten und dem zweiten Lager.

Weiterhin ist nach einer Ausgestaltung der Erfindung der Anker topfförmig mit einem Bodenteil und einem Hohlzylinderabschnitt ausgebildet, wobei die Achse drehfest zentrisch in dem Bodenteil gelagert ist. Damit ergibt sich in vorteilhafter Weise zusätzlicher Bauraum innerhalb dieses Hohlzylinderabschnittes.

So ist es weiterbildungsgemäß vorgesehen, dass das Gehäuse auf der dem Hohlzylinderabschnitt des Ankers zugewandten Stirnseite einen zentrisch angeordneten, zumindest teilweise in den Hohlzylinderabschnitt des Ankers ragenden hohlzylindrischen Gehäuseansatz mit wenigstens einem Sensorelements (z.B. einen Halbsensor) aufweist, wobei die Achse zur Aufnahme wenigstens ein Sensorbetätigungselement (z.B. einen Magneten) mit einem in den Hohlzylinderabschnitt des Ankers ragenden Achsenabschnitt ausgebildet ist, welcher bei einer Bewegung des Ankers zumindest teilweise in dem hohlzylindrischen Gehäuseansatz ragt. Damit kann die Stellung des Ankers erfasst und gesteuert bzw. geregelt werden.

Des Weiteren ist nach einer bevorzugten Weiterbildung der Erfindung der Anker mittels eines Federelementes in einer Position vorgespannt, vorzugsweise ist dabei das Federelement an der das erste Lager tragenden Stirnseite des Gehäuses angeordnet.

Schließlich ist es vorteilhaft, wenn auf dem Anker mehrere, wenigstens zwei Permanentmagnetringe angeordnet sind, wodurch die Hublänge des Ankers vergrößert werden kann.

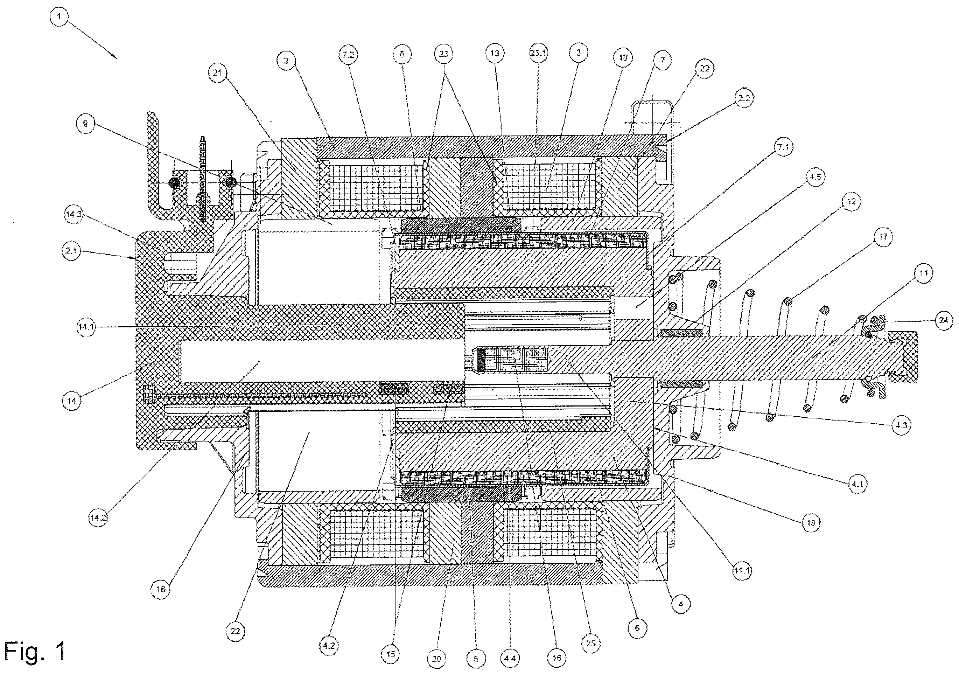

Die Erfindung wird nachfolgend anhand eines Ausführungsbeispiels unter Bezugnahme auf die einzige beigefügte Figur 1 ausführlich beschrieben. Diese Figur 1 zeigt eine Schnittdarstellung eines elektromagnetischen Aktuators gemäß einer Ausführungsform der Erfindung.

Dieser elektromagnetische Aktuator 1 umfasst ein rohrförmiges Gehäuse 2 aus weichmagnetischem Material, wobei Stirnseiten 2.1 und 2.2 von einem Deckel 18 und einem Deckel 19 gebildet werden. Das Gehäuse 2 nimmt zwei durch eine Ringplatte 20 axial beanstandete und ringförmig ausgebildete Erregerspulen 3 auf, wobei jeweils zwischen einer Erregerspule 3 und einem Deckel 18 bzw. 19 eine weitere Ringplatte 21 bzw. 22 angeordnet ist.

Von den Erregerspulen 3 sowie den Ringplatten 20 bis 22 wird ein zylinderförmiger Ankerraum zur Aufnahme eines in demselben verschiebbaren zylinderförmigen Ankers 4 gebildet. Dieser Anker 4 ist topförmig mit einem Bodenteil 4.3 und einem Hohlzylinderabschnitt 4.4 ausgebildet und ist über den Bodenteil 4.3 zentrisch auf einer Achse 11 drehfest angeordnet, wobei diese Achse 11 in einer von dem Deckel 19 gebildeten ersten Lagerstelle 12 verschiebbar gelagert ist.

Auf diesem Anker 4 sind zwei Permanentmagnetringe 5 und 6 angeordnet, deren axiale Länge jeweils ungefähr der halben axialen Länge des Ankers 4 entspricht, so dass diese beiden Permanentmagnetringe 5 und 6 einander liegend sich über die gesamte Länge des Ankers 4 erstrecken. Diese beiden Permanentmagnetringe 5 und 6 sind entgegengesetzt magnetisiert.

Dieser Anker 4 ist zusammen mit diesen beiden Permanentmagnetringen 5 und 6 in einer dünnwandigen Hülse 7 aus nicht magnetischem Material, beispielsweise aus Edelstahl angeordnet. Zur Herstellung eines solchen Ankers 4 weist diese Hülse 7 an den Stirnseiten 4.1 und 4.2 des Ankers 4 überstehende Randbereiche 7.1 und 7.2 auf, die auf diese Stirnseiten 4.1 und 4.2 zur Bildung einer Pressverbindung abgekantet und mit denselben verstemmt werden.

Zur Bildung eines zweiten Lagers 13 für den Anker 4 ist in dem Ankerraum bei der gezeigten Anordnung ein Lagerrohr 8 zentrisch in Bezug auf die axiale Länge des Ankerraumes angeordnet, so dass die Ringplatte 20 überdeckt wird. Damit kann die äußere Mantelfläche der Hülse 7 auf der inneren Mantelfläche dieses Lagerrohres 8 entlang gleiten, wobei zur Verbesserung der Gleiteigenschaften diese innere Mantelfläche des Lagerrohres 8 mit einer Gleitschicht versehen werden kann. Zur Führung des Ankers 4 ist beidseitig dieses Lagerrohres 8 jeweils ein Führungsrohr 9 und 10 angeordnet, welche von dem Führungsrohr 8 durch mit Spulenkörpern 23 der Erregerspulen 3 verbundenen z.B. Nocken 23.1 als Montagehilfen beanstandet sind. Durch diese Position des zweiten Lagers 13 wird die Gefahr einer Verkippung des Ankers 4 wesentlich reduziert. Wegen der Position des von dem Lagerrohr 8 gebildeten zweiten Lagers 13, ergibt sich zu dem ersten Lager 12 eine kurze Toleranzkette.

Mit dieser Einbettung der Permanentmagnetringe 5 und 6 in die Hülse 7 werden diese gegen Abrieb und Schlag geschützt. Außerdem bildet die äußere Mantelfläche der Hülse 7 eine große und ununterbrochene Gleitfläche. Auch bei einem Bruch der empfindlichen Permanentmagnetringe 5 und 6 können die Bruchstücke aufgrund der Einhausung mittels der Hülse 7 nicht Auseinanderfallen, so das trotzdem die Funktionsfähigkeit des elektromagnetischen Aktuators 1 gewährleistet bleibt. Schließlich werden diese Permanentmagnetringe 5 und 6 aufgrund der Einhausung gegen Schmutz, insbesondere gegen metallische Partikel geschützt.

Außerhalb des Gehäuses 2 ist auf der Achse 11 eine konusförmige Spiralfeder als Federelemente 17 angeordnet, die sich zum einen an einem Ende der Achse 11 angeordneten Anschlag 24 und zum anderen an dem Deckel 19 abstützt. Mithilfe dieser Feder 17 wird der Anker 4 in Richtung des Deckels 19 vorgespannt. Eine konische Spiralfeder 17 kann außerdem mit einer am Deckel 19 anliegenden Fangwindung ausgestattet, die bei einem Bruch der Spiralfeder 17 ein mögliches Herunterfallen der Feder 17 verhindert.

Um die Position des Ankers 4 innerhalb des Ankerraumes der diktieren zu können, ist ein Sensormagnetsystem, bestehend aus einem Sensormagnet 16 und einem Hallsensor 15 in dem elektromagnetischen Aktuator 1 integriert.

Zur Aufnahme des Sensormagneten 16 ist die Achse 11 in den Hohlzylinderabschnitt 4.4 des Ankers 4 ragend mit einem Achsenabschnitt 11.1 ausgebildet. Am Ende dieses Achsenabschnitt es 11.1 ist der Sensormagnet 16 angeordnet. Es können auch mehrere Sensormagnete 16 vorgesehen werden. Als Sensormagnete 16 werden kreisförmige Magnete verwendet, wodurch die Montage wesentlich erleichtert wird, da auf die Ausrichtung und Positionierung wegen möglicher Kippgefahr oder möglicher Schrägstellung nicht geachtet werden muss.

Auf der Stirnseite 2.1 des Gehäuses 2 ist ein Gehäuseansatz 14 als Kunststoffteil angeordnet, welches einen zentrisch durch den Deckel 18 hindurchgeführten hohlzylindrischen Gehäuseansatzstutzen 14.1 mit zylindrischen Aufnahmeraum 14.2 sowie einen außerhalb des Deckels 18 sich befindenden Stecker 14.3 umfasst. Der Gehäuseansatzstutzen 14.1 bis ca. zur axialen Mitte des Ankerraumes, so dass bei Anliegen der Stirnseite 4.1 des Ankers 4 an dem Deckel 19 dieser Gehäuseansatzstutzen 14.1 zumindest teilweise in den Hohlzylinderabschnitt 4.4 des Ankers 4 ragt. Im stirnseitigen Bereich dieses Gehäuseansatz Stutzens 14.1 ist der Hallsensor 15 angeordnet.

Zur Verdrehsicherung des Ankers 4 ist zwischen demselben und dem Gehäuseansatzstutzen 14.1 eine Kunststoffhülse 25 in dem Hohlzylinderabschnitt 4.4 an dessen inneren Umfangsfläche anliegend vorgesehen. Diese Kunststoffhülse 25 weist in axialer Richtung verlaufende Stege auf, die in entsprechend ausgebildeten guten des Gehäuseansatzstutzens 14.1 eingreifen. Eine solche Verdrehsicherung kann auch dadurch realisiert werden, dass ein Bolzen eingesetzt wird, der in dem Deckel 19 endseitig befestigt ist und durch eine Bohrung 4.5 der Bodenplatte 4.3 des Ankers 4 hindurchgeführt und bis in eine entsprechende Bohrung in dem Gehäuseansatzstutzen 14.1 ragt.

Bei einer Bestromung der beiden Erregerspulen 3 wird das dadurch erzeugte Magnetfeld mit dem von den beiden Permanent-Bei einer Bestromung der beiden Erregerspulen 3 wird das dadurch erzeugte Magnetfeld mit dem von den beiden Permanentmagnetringen 5 und 6 erzeugten Magnetfeld gekoppelt und dadurch eine entsprechende Bewegung des Ankers 4 verursacht, wobei die Bewegungsrichtung von der Bestromungsrichtung abhängt.

In dem beschriebenen Ausführungsbeispiel gemäß Figur 1 wird für die beiden Erregerspulen 3 zwei Permanentmagnetringe 5 und 6 verwendet. Anstelle dieser beiden Permanentmagnetringe 5 und 6 kann lediglich auch nur ein einziger Permanentmagnetring verwendet werden. Um einen großen Hub des Ankers 4 zur realisieren, können auch mehrere Magnete von solchen Permanentmagnetringen 5 und 6 aneinandergereiht werden.

### Bezugszeichenliste

- 1: elektromagnetischer Aktuator
- 2: Gehäuse
- 2.1: Stirnseite des Gehäuses 2
- 2.2: Stirnseite des Gehäuses 2
- 3: Erregerspule
- 4: Anker
- 4.1: Stirnseite des Ankers 4
- 4.2: Stirnseite des Ankers 4
- 4.3: Bodenteil des Ankers 4
- 4.4: Hohlzylinderabschnitt des Ankers 4
- 4.5: Bohrung
- 5: Permanentmagnetring
- 6: Permanentmagnetring
- 7: Hülse
- 7.1: Randbereich der Hülse 7
- 7.2: Randbereich der Hülse 7
- 8: Lagerrohr
- 9: Führungsrohr
- 10: Führungsrohr
- 11: Achse
- 11.1: Achsenabschnitt
- 12: erstes Lager
- 13: zweites Lager
- 14: Gehäuseansatz
- 14.1: Gehäuseansatzstutzen
- 14.2: zylinderförmiger Aufnahmeraum des Gehäuseansatzstutzens 14.1
- 14.3: Stecker des Gehäuseansatzes 14
- 15: Hallsensor
- 16: Magnetsensor
- 17: Federelement, Spiralfeder
- 18: Deckel der Stirnseite 2.1
- 19: Deckel der Stirnseite 2.2
- 20: Ringplatte
- 21: Ringplatte
- 22: Ringplatte
- 23: Spulenkörper
- 23.1: Nocken des Spulenkörpers 23
- 24: Anschlag
- 25: Kunststoffhülse

## Patentansprüche

1. Elektromagnetischer Aktuator (1), umfassend
- ein weichmagnetisches Gehäuse (2) mit wenigstens zwei zueinander axial beabstandeten Erregerspulen (3),
- einen in dem Gehäuse (2) konzentrisch zu den Erregerspulen (3) gelagerten und axial verschiebbaren Anker (4), wobei der Anker (4) wenigstens einen diesen radial umschließenden Permanentmagnetring (5)aufweist, der sich über die gesamte Länge des Ankers (4) erstreckt,
- wobei eine nichtmagnetische Hülse (7) vorgesehen ist, welche den Anker (4) mit dem wenigstens einen Permanentmagnetring (5) formschlüssig und axial und radial umschließt , so dass der wenigstens eine Permanentmagnet (5) vollständig eingebettet ist,
- wobei die Hülse (7) stirnseitig jeweils mit den Stirnflächen (4.1, 4.2) des Ankers (4) durch Aufpressen, Verstemmen oder durch Bördeln verbunden ist.

2. Elektromagnetischer Aktuator (1) nach Anspruch 1, wobei die Hülse (7) dünnwandig ausgebildet ist

3. Elektromagnetischer Aktuator (1) nach einem der vorhergehenden Ansprüche, wobei zur Führung des Ankers (4) ein weichmagnetisches Lagerrohr (8) vorgesehen ist, welches konzentrisch zu den Erregerspulen (3) in dem Gehäuse (2) angeordnet ist.

4. Elektromagnetischer Aktuator (1) nach Anspruch 3, wobei zur Führung des Ankers (4) wenigstens ein sich axial an das Lagerrohr (8) anschließendes nichtmagnetisches Führungsrohr (9, 10) vorgesehen ist.

5. Elektromagnetischer Aktuator (1) nach Anspruch 3, wobei der Anker (4) mittels einer Achse (11) in einem ersten stirnseitigen Lager (12) des Gehäuses (2) und mittels des Lagerrohrs (8) als zweites Lager (13) verschiebbar in dem Gehäuse (2) gelagert ist.

6. Elektromagnetischer Aktuator (1) nach Anspruch 5, wobei
- der Anker (4) topfförmig mit einem Bodenteil (4.3) und einem Hohlzylinderabschnitt (4.4) ausgebildet ist, und
- die Achse (11) drehfest zentrisch in dem Bodenteil (4.3) gelagert ist.

7. Elektromagnetischer Aktuator (1) nach Anspruch 6, wobei
- das Gehäuse (2) auf der dem Hohlzylinderabschnitt (4.4) des Ankers (4) zugewandten Stirnseite (2.1) einen zentrisch angeordneten, zumindest teilweise in den Hohlzylinderabschnitt (4.4) des Ankers (4) ragenden hohlzylindrischen Gehäuseansatz (14, 14.1) mit wenigstens einem Sensor (15) aufweist, und
- die Achse (11) zur Aufnahme wenigstens eines Sensorbetätigungselement (16) mit einem in den Hohlzylinderabschnitt (4.4) des Ankers (4) ragenden Achsenabschnitt (11.1) ausgebildet ist, welcher bei einer Bewegung des Ankers (4) zumindest teilweise in dem hohlzylindrischen Gehäuseansatz (14) ragt.

8. Elektromagnetischer Aktuator (1) nach einem der vorhergehenden Ansprüche, wobei der Anker (4) mittels eines Federelementes (17) in einer Position vorgespannt ist.

9. Elektromagnetischer Aktuator (1) nach Anspruch 5 und 8, wobei das Federelement (17) an der das erste Lager (12) tragenden Stirnseite (2.2) des Gehäuses (2) angeordnet ist.

10. Elektromagnetischer Aktuator (1) nach einem der vorhergehenden Ansprüche, wobei auf dem Anker (4) wenigstens zwei Permanentmagnetringe (5, 6) angeordnet sind.

## Claims

1. Electromagnetic actuator (1), comprising
- a soft-metallic housing (2) with at least two excitation coils (3) arranged axially at a distance to each other,
- an axially moveable anchor (4) mounted concentrically to the excitation coils (3) in the housing (2), wherein the anchor (4) comprises at least one radially surrounding permanent magnet ring (5) which extend over the entire length of the anchor (4),
- wherein a nonmagnetic sheath (7) is provided which positively and axially and radially encompasses the anchor (4) with the at least one permanent magnet ring (5) such that the at least one permanent magnet ring (5) is completely imbedded,
- wherein the sheath (7) is connected at the front side to each of the end faces (4.1, 4.2) of the anchor (4) by pressing, caulking or crimping.

2. Electromagnetic actuator (1) in accordance with claim 1,
wherein the sheath (7) is implemented with thin walls.

3. Electromagnetic actuator (1) in accordance with either of the preceding claims, wherein, for guiding the anchor (4), a soft magnetic bearing tube (8) is provided which is arranged in the housing (2) concentrically to the excitation coils (3).

4. Electromagnetic actuator (1) in accordance with claim 3,
wherein, for guiding the anchor (4), at least one guiding tube (9, 10) is provided which connects axially to the bearing tube (8).

5. Electromagnetic actuator (1) in accordance with claim 3,
wherein the anchor (4) is moveably mounted as a second bearing (13) in the housing (2) by means of an axle (11) in a first front face bearing (12) of the housing (2) and by means of the bearing tube (8).

6. Electromagnetic actuator (1) in accordance with claim 5, wherein
- the anchor (4) is implemented in a pot-like shape with a floor part (4.3) and a hollow cylinder segment (4.4) and
- the axle (11) is mounted non-rotatably and centered in the floor part (4.3).

7. Electromagnetic actuator (1) in accordance with claim 6, wherein
- the housing (2) comprises a housing shoulder (14. 14.1) with at least one sensor (15) and which is arranged centrically on the end face (2.1) that faces the hollow cylinder segment (4.4) of the anchor (4) and which at least partially extends into the hollow cylinder segment (4.4) of the anchor (4) and
- the axle (11) is implemented to receive at least one sensor-activation element (16) in an axle segment (11.1) that extends into the hollow cylinder segment (4.4) of the anchor (4) and which, when the anchor (4) is moved, extends at least partially into the hollow cylinder housing shoulder (14).

8. Electromagnetic actuator (1) in accordance with any of the preceding claims, wherein the anchor (4) is biased in a position by means of a spring element (17).

9. Electromagnetic actuator (1) in accordance with claims 5 and 8,
wherein the spring element (17) is arranged on the end face (2.2) of the housing (2) that carries the first bearing (12).

10. Electromagnetic actuator (1) in accordance with any of the preceding claims, wherein at least two permanent magnet rings (5, 6) are arranged on the anchor (4).

## Revendications

1. Actionneur électromagnétique (1) comprenant :
- un boîtier magnétique doux (2) ayant au moins deux bobines excitatrices (3) écartées axialement l'une par rapport à l'autre,
- un induit (4) monté dans le boîtier (2) de façon concentrique aux bobines excitatrices (3) et coulissant axialement, l'induit (4) ayant au moins un aimant permanent annulaire (5) entourant radialement l'induit (4) et s'étendant sur toute la longueur de l'induit (4),
- un manchon non magnétique (7) prévu pour entourer axialement et radialement l'induit (4) avec au moins un aimant permanent annulaire (5), par une liaison par la forme de façon à entourer complètement cet aimant permanent (5),
dans lequel
le manchon (7) est relié, côté frontal, respectivement à la surface frontale (4.1, 4.2) de l'induit (4) par sertissage, matage ou repliage.

2. Actionneur électromagnétique (1) selon la revendication 1,
dans lequel
le manchon (7) est à paroi mince.

3. Actionneur électromagnétique (1) selon l'une des revendications précédentes,
dans lequel
un tube de palier (8) magnétique doux concentrique aux bobines excitatrices (3) dans le boîtier (2) guide l'induit (4).

4. Actionneur électromagnétique (1) selon la revendication 3,
dans lequel
au moins un tube de guidage (9, 10) non magnétique, relié axialement au tube de palier (8) l'induit (4).

5. Actionneur électromagnétique (1) selon la revendication 3,
dans lequel
l'induit (4) est monté par un axe (11) dans un premier palier (12) côté frontal du boîtier (2), et de façon coulissante dans le boîtier (2) par le tube de palier (8) comme second palier (13).

6. Actionneur électromagnétique (1) selon la revendication 5,
dans lequel
- l'induit (4) est réalisé en forme de pot avec un fond (4.3) et un segment de cylindre creux (4.4), et
- l'axe (11) est monté solidairement en rotation dans le fond (4.3).

7. Actionneur électromagnétique (1) selon la revendication 6, **caractérisé en ce que**
- sur sa face frontale (2.1) tournée vers le segment de cylindre creux (4.4) de l'induit (4), le boîtier (2) comporte un prolongement (14, 14.1), centré, qui pénètre au moins partiellement dans le segment de cylindre creux (4.4) de l'induit (4) par un prolongement de boîtier (14, 14.1) cylindrique creux, avec au moins un capteur (15), et
- pour recevoir un élément d'actionnement de capteur (16), l'axe (11) a un segment d'axe (11.1) qui vient dans le segment de cylindre creux (4.4) de l'induit (4) et pénètre au moins partiellement dans le prolongement cylindrique creux (14) du boîtier lors d'un mouvement de l'induit (4).

8. Actionneur électromagnétique (1) selon l'une des revendications précédentes
dans lequel
l'induit (4) est précontraint dans sa position par un élément de ressort (17).

9. Actionneur électromagnétique (1) selon les revendications 5 et 8, dans lequel
l'élément de ressort (17) est prévu sur la face frontale (2.2) du boîtier (2) qui porte le premier palier (12).

10. Actionneur électromagnétique (1) selon l'une des revendications précédentes
dans lequel
au moins deux aimants permanents annulaires (5, 6) sont prévus sur l'induit (4).
